# EUROPÄISCHE PATENTANMELDUNG

(11) **EP 4 760 206 A1**
(43) Veröffentlichungstag der Anmeldung: **17.06.2026**
(21) Anmeldenummer: 25221702.1
(22) Anmeldetag: 09.12.2025
(51) Int. Cl.: G01C 19/58

(54) **VERFAHREN ZUR STEUERUNG EINES ATOMINTERFEROMETERS, ATOMINTERFEROMETER UND COMPUTERPROGRAMM**

(30) Priorität: 13.12.2024 DE 102024137629
(71) Anmelder: Deutsches Zentrum für Luft- und Raumfahrt e.V., 53227 Bonn-Oberkassel (DE)
(72) Erfinder: Gerlach, Sandra, 30559 Hannover (DE); Deppner, Christian, 30453 Hannover (DE); Herr, Waldemar, 30625 Hannover (DE); Schubert, Christian, 30167 Hannover (DE)
(74) Vertreter: Günther, Constantin

(57) **Zusammenfassung**

Die Erfindung betrifft ein Verfahren zur Steuerung und Implementierung eines Atominterferometers, bei dem wenigstens ein Ensemble von Atomen in einem Auskoppelzustand präpariert wird, wobei der Auskoppelzustand den Zustand nach Kühlverfahren und/oder anderen Präparationsschritten oder allgemein den Zustand vor den nun folgenden Schritten beschreibt, bei dem dann das wenigstens eine Ensemble von Atomen durch einen Transfer-Kontrolleingriff in einen von dem Auskoppelzustand verschiedenen Transferzustand überführt wird, bei dem anschließend das wenigstens eine Ensemble von Atomen durch wenigstens einen Relaunch-Kontrolleingriff in einem Atominterferometereingangszustand überführt wird, bei dem dann durch auf das wenigstens eine Ensemble von Atomen einwirkende kohärente Kontrolleingriffe mit dem wenigstens einen Ensemble von Atomen eine Materiewelleninterferometriesequenz durchgeführt wird. Die Erfindung betrifft außerdem ein Atominterferometer, das zur Ausführung eines solchen Verfahrens eingerichtet ist, sowie ein Computerprogramm zur Ausführung eines solchen Verfahrens.

## Beschreibung

Die Erfindung betrifft ein Verfahren zur Steuerung und Implementierung eines Atominterferometers, bei dem wenigstens ein Ensemble von Atomen in einem Auskoppelzustand präpariert wird, wobei der Auskoppelzustand den Zustand nach Kühlverfahren und/oder anderen Präparationsschritten oder allgemein den Zustand vor den nun folgenden Schritten beschreibt, bei dem dann das wenigstens eine Ensemble von Atomen durch einen Transfer-Kontrolleingriff in einen von dem Auskoppelzustand verschiedenen Transferzustand überführt wird, bei dem anschließend das wenigstens eine Ensemble von Atomen durch wenigstens einen Relaunch-Kontrolleingriff in einem Atominterferometereingangszustand überführt wird, bei dem dann durch auf das wenigstens eine Ensemble von Atomen einwirkende kohärente Kontrolleingriffe mit dem wenigstens einen Ensemble von Atomen eine Materiewelleninterferometriesequenz durchgeführt wird. Die Erfindung betrifft außerdem ein Atominterferometer, das zur Ausführung eines solchen Verfahrens eingerichtet ist, sowie ein Computerprogramm zur Ausführung eines solchen Verfahrens.

Die Atominterferometrie bietet die Möglichkeit für hochsensitive, langzeitstabile und absolutgenaue Messungen von Rotationen und Beschleunigungen. Weltweit wurden dazu Laboraufbauten sowie auch transportable Systeme für die Gravimetrie realisiert und getestet. Weiterhin werden atominterferometrische Gravimeter mittlerweile auch kommerziell angeboten. Zu atominterferometrischen Mehrachseninertialsensoren existieren verschiedene Konzeptideen. Grundlegende Arbeiten z.B. zur Hybridisierung mit externen Sensoren zur Erweiterung der Bandbreite und Demonstrationsexperimente zu sequentiellen Messungen in mehreren Achsen wurden publiziert. Eines der Sensorelemente ist das Detektionssystem bzw. Detektionskonzept, mit dem die Interferometerausgänge ausgelesen werden, z.B. durch Bestimmen der (relativen) Atomanzahlen in den

Interferometerausgängen, um auf die Rotationen und Beschleunigungen während der Interferometrie zurückschließen zu können. Hierfür werden z.B. Fotodioden zur Aufnahme eines Fluoreszenzsignals verwendet, oder Kameras im Rahmen einer räumlich aufgelösten Absorptions- oder Fluoreszenzdetektion. Die Verwendung einer räumlich aufgelösten Detektion bietet neben der Bestimmung der Atomanzahl und Form des atomaren Ensembles auch die Möglichkeit mehrere Interferometerausgänge, auch verschiedener Interferometer, gleichzeitig zu detektieren, was auch experimentell demonstriert und genutzt wurde. In der Literatur wurden Konzepte mit einem Zurückwerfen ("relaunch") der Atome nach einer Freifallzeit vorgeschlagen, um die Freifallzeit im Interferometer zu erhöhen [R1], bzw. ein Interferometer mit mehreren Umläufen / Schleifen zur ermöglichen (,multi loop') [R2]. Weiterhin wurden in einer spezifischen Implementierung eines Doppelinterferometers jeweils ein Interferometerausgang von jedem der beiden Interferometer so zusammengeführt, dass sie in einem Kamerabild aufgenommen werden konnten [R3]. Dies setzt voraus, dass die Implementierung der Interferometer eine detektierbare räumliche Dichtemodulation über die Interferometerausgänge ermöglicht.

Veröffentlichungen:
R1: Atom-Chip Fountain Gravimeter S. Abend, M. Gebbe, M. Gersemann, H. Ahlers, H. Müntinga, E. Giese, N. Gaaloul, C. Schubert, C. Lämmerzahl, W. Ertmer, W. P. Schleich, and E. M. Rasel Phys. Rev. Lett. 117, 203003 - Published 11 November 2016
R2: Multi-loop atomic Sagnac interferometry Christian Schubert, Sven Abend, Matthias Gersemann, Martina Gebbe, Dennis Schlippert, Peter Berg & Ernst M. Rasel Published: 09 August 2021
R3: Phase Shift in an Atom Interferometer due to Spacetime Curvature across its Wave Function Peter Asenbaum, Chris Overstreet, Tim Kovachy, Daniel D. Brown, Jason M. Hogan, and Mark A. Kasevich Phys. Rev. Lett. 118, 183602 - Published 1 May 2017
R4: Differential interferometry using a Bose-Einstein condensate Matthias Gersemann, Martina Gebbe, Sven Abend, Christian Schubert & Ernst M. Rasel Eur. Phys. J. D 74, 203 (2020)

Der Erfindung liegt die Aufgabe zugrunde, ein solches Atominterferometer im Hinblick auf eine vorteilhafte praktische, bauliche Realisierung zu optimieren.

Diese Aufgabe wird bei einem eingangs erläuterten Verfahren zur Steuerung und Implementierung eines Atominterferometers unter Zugrundelegung eines kartesischen Koordinatensystems mit den Achsen x, y, und z, wobei bei Betrieb des Atominterferometers in einem Gravitationsfeld die z-Achse in Wirkrichtung der Gravitation ausgerichtet ist, dadurch gelöst, dass wenigstens ein Ensemble von Atomen von einer Ausgangsposition in eine erste Richtung bewegt wird, die eine räumliche Komponente in der x-y-Ebene hat, und nach Zurücklegung eines bestimmten Wegs in der ersten Richtung das wenigstens eine Ensemble von Atomen durch Bestrahlung mit wenigstens einem kohärenten Relaunch-Kontrolleingriff wieder in Richtung zur Ausgangsposition zurückbewegt wird, wobei die Detektion der Interferometerausgänge nach Durchführung der Materiewelleninterferometriesequenz in einem Detektionsbereich des Atominterferometers erfolgt, der in der Umgebung der Ausgangsposition liegt. Dementsprechend können bei einem das erfindungsgemäße Verfahren anwendende Atominterferometer die Atominterferometerausgänge relativ nah beieinander und insbesondere in der Nähe der Ausgangsposition angeordnet werden, wodurch das Atominterferometer hinsichtlich der Baugröße vorteilhaft skaliert werden kann, insbesondere im Hinblick auf eine Baugrößenminimierung. Insbesondere kann das erfindungsgemäße Verfahren und das ein solches Verfahren nutzende Atominterferometer unabhängig vom Detektionsvolumen skaliert werden und dabei ohne Bauraumvergrößerung als kompakter, transportabler atominterferometrischer Mehrachseninertialsensor realisiert werden, auch mit der Möglichkeit für Rotationsmessungen, somit insbesondere auch ein Sechsachseninertialsensor.

Die Detektion ist zwangsweise Teil eines solchen Sensors und muss auf die Sensoranforderungen und technische Möglichkeiten angepasst sein. Referenz R1 unterstützt keine Rotationsmessungen. Referenz R2 unterstützt Rotationsmessungen in zwei Achsen, aber keine (statischen) Beschleunigungsmessungen. Referenz R3 benötigt eine detektierbare räumliche Dichtemodulation über die Interferometerausgänge für eine differentielle Beschleunigungsmessung zwischen zwei Atominterferometern, um aus der relativen Lage der Dichtemodulationen zueinander eine Information zum differentiellen Signal der beiden Atominterferometer zueinander zu gewinnen. Rotationsmessungen oder Messungen von Beschleunigungen in den anderen beiden Achsen oder eine direkte Beschleunigungsmessung in der ersten Achse wurden in R3 nicht demonstriert. Die Skalierbarkeit in Referenz R4 ist durch den Detektionsbereich beschränkt.

Die Erfindung ermöglicht durch eine günstige Positionierung der Interferometerausgänge relativ zu dem System zur räumlich aufgelösten Detektion, dass die Interferometerausgänge simultaner Atominterferometer in einem Bild erfasst werden können, insbesondere für einen atominterferometrischen Sechsachseninertialsensor. Der Ansatz bietet in Abgrenzung zu Referenz R4 eine Skalierbarkeit kritischer Parameter des Atominterferometers, insbesondere der Freifallzeit, jenseits eines eingeschränkten Detektionsbereiches. Veröffentlichte Konzepte adressieren den Aspekt der Detektion nicht hinreichend oder bieten keine skalierbare Lösung, was letztlich die Leistungsfähigkeit limitiert.

Das zuvor genannte Ensemble von Atomen, das in der Literatur zum Teil auch als Atomensemble oder Atomwolke bezeichnet wird, kann auch als Materiewelle(n) oder als Atome beschrieben werden, die sich in einem kohärenten Superpositionszustand befinden. Als allgemeiner Oberbegriff soll in dieser Anmeldung hierfür der Ausdruck "Ensemble von Atomen" verwendet werden.

Das Ensemble von Atomen befindet sich zu Beginn in einem Auskoppelzustand, d.h. einem Zustand nach Kühlverfahren und/oder anderen Präparationsschritten oder allgemein einem Zustand vor den nun folgenden Schritten, der insbesondere vor der Durchführung der kohärenten Kontrolleingriffe der Materiewelleninterferometriesequenz vorliegt. Das Ensemble von Atomen wird dann durch einen Transfer-Kontrolleingriff in einen von dem Auskoppelzustand verschiedenen Transferzustand überführt und danach durch einen Relaunch-Kontrolleingriff in einem Atominterferometereingangszustand. Es wird dann die Materiewelleninterferometriesequenz mit mehreren kohärenten Kontrolleingriffen durchgeführt, in der das Ensemble von Atomen einen oder mehrere voneinander verschiedene Zustände haben kann, z.B. ab dem ersten bis zum letzten kohärenten Kontrolleingriff.

Solche Transfer-Kontrolleingriffe, Relaunch-Kontrolleingriffe und kohärenten Kontrolleingriffe können z.B. die Abgabe von Lichtpulsen, z.B. von einem Laser oder einer anderen Lichtquelle, Magnetfeldgradienten und/oder Mikrowellenpulsen auf das wenigstens eine Ensemble von Atomen sein, oder allgemein gesagt beliebige Methoden zur kohärenten Manipulation des Ensembles von Atomen, also eine Form der Quantenkontrolle, die die Welleneigenschaften von Materie nutzt, um die zeitliche Entwicklung eines Quantensystems auf eine gewünschte Art und Weise zu steuern. Im Laufe der Materiewelleninterferometriesequenz werden in der Regel mehrere kohärente Kontrolleingriffe durchgeführt. Der Begriff "Puls" wird als Oberbegriff für beliebige Arten von periodischen und nicht-periodischen Ereignissen verstanden, wobei der Begriff "Puls" auch einen Impuls erfasst, z.B. in Form einer sich periodisch wiederholenden Abfolge von Impulsen, sich periodisch wiederholenden impuls- oder stoßartigen Ereignissen und/oder im Falle eines Lichtpulses ein zeitlich einmalig oder mehrmalig auftretendes Auf- und Abschwellen der Lichtleistung.

Ein weiterer Vorteil der Erfindung ist, dass das erfindungsgemäße Verfahren sowie das Verfahren ausführende Atominterferometer wahlweise in einem Gravitationsfeld, z.B. im Erdschwerefeld, oder im schwerelosen Raum eingesetzt werden kann. Bei Betrieb des Atominterferometers in einem Gravitationsfeld soll die z-Achse in Wirkrichtung der Gravitation ausgerichtet sein, bei Schwerelosigkeit ist die Ausrichtung irrelevant. Beim erfindungsgemäßen Verfahren werden vorteilhaft räumliche Bewegungen des Ensembles von Atomen in der x-y-Ebene, die nachfolgend auch als Horizontalebene oder horizontale Richtung bezeichnet wird, genutzt, um die Interferometerausgänge möglichst nah an der Ausgangsposition des Ensembles von Atomen zu platzieren. Die Ausgangsposition kann z.B. die Position des Ensembles von Atomen im Atomeingangszustand oder im Startzustand sein. Eine Beeinflussung der räumlichen Bewegungen des Ensembles wird durch die kohärenten Relaunch-Kontrolleingriffe ermöglicht, durch die die Richtung des Ensembles von Atomen in der horizontalen Richtung und/oder auch in vertikaler Richtung (z-Richtung) invertiert oder in anderer Weise umgelenkt wird.

Gemäß einer vorteilhaften Ausgestaltung der Erfindung ist vorgesehen, dass der Detektionsbereich eine räumliche Ausdehnung in Richtung der x-Achse hat, die geringer ist als der in Richtung der x-Achse zurückgelegte Weg des wenigstens einen Ensembles von Atomen. Auf diese Weise ist eine Detektionsvolumen-unabhängige Skalierung des Atominterferometers bzw. des durchgeführten Verfahrens in Richtung der x-Achse möglich, insbesondere eine deutliche Bauraumverringerung in x-Richtung. Beispielsweise kann die räumliche Ausdehnung des Detektionsbereichs in Richtung der x-Achse weniger als 50% des in Richtung der x-Achse zurückgelegten Wegs des wenigstens einen Ensembles von Atomen betragen.

Gemäß einer vorteilhaften Ausgestaltung der Erfindung ist vorgesehen, dass der Detektionsbereich eine räumliche Ausdehnung in Richtung der y-Achse hat, die geringer ist als der in Richtung der y-Achse zurückgelegte Weg des wenigstens einen Ensembles von Atomen. Auf diese Weise ist eine Detektionsvolumen unabhängige Skalierung des Atominterferometers bzw. des durchgeführten Verfahrens in Richtung der y-Achse möglich, insbesondere eine deutliche Bauraumverringerung in y-Richtung. Beispielsweise kann die räumliche Ausdehnung des Detektionsbereichs in Richtung der y-Achse weniger als 50% des in Richtung der y-Achse zurückgelegten Wegs des wenigstens einen Ensembles von Atomen betragen

Gemäß einer vorteilhaften Ausgestaltung der Erfindung ist vorgesehen, dass der Detektionsbereich eine räumliche Ausdehnung in der horizontalen Richtung hat, die geringer ist als der in der horizontalen Richtung zurückgelegte Weg des wenigstens einen Ensembles von Atomen. Auf diese Weise ist eine räumliche Skalierung in der Horizontalebene möglich.

Gemäß einer vorteilhaften Ausgestaltung der Erfindung ist vorgesehen, dass die kohärenten Kontrolleingriffe derart auf das wenigstens eine Ensemble von Atomen einwirken, dass der Vektor des Impulsübertrags auf das wenigstens eine Ensemble von Atomen wenigstens eine räumliche Komponente in einem von Null verschiedenen Winkel zum initialen Bewegungszustand des wenigstens einen Ensembles von Atomen hat. Der initiale Bewegungszustand kann bei vorhandener Gravitation eine Bewegung in z-Richtung sein, z.B. senkrecht nach unten, oder insbesondere bei Schwerelosigkeit eine beliebige Bewegungsrichtung im dreidimensionalen Raum sein. Allgemein gesagt können die kohärenten Kontrolleingriffe derart auf das wenigstens eine Ensemble von Atomen einwirken, dass der Vektor des Impulsübertrags auf das wenigstens eine Ensemble von Atomen wenigstens eine räumliche Komponente in x- und/oder y-Richtung bzw. in Schwerelosigkeit auch in z-Richtung hat. Dies erlaubt bei einfacher Konstruktion des Atominterferometers eine effiziente Bewegung des Atomensembles mit einer horizontalen Bewegungskomponente, d.h. mit einer Komponente in der x- und/oder y-Richtung. Somit kann beispielsweise im Falle von Lichtpulsen als kohärente Kontrolleingriffe der effektive Wellenvektor des Impulsübertrags auf das wenigstens eine Ensemble von Atomen eine räumliche Komponente in Horizontalrichtung haben. Bei anderen Arten der kohärenten Kontrolleingriffe kann eine zum effektiven Wellenvektor vergleichbare Größe eine solche Ausrichtung haben. Beispielsweise können die kohärenten Kontrolleingriffe der Materiewelleninterferometriesequenz von einer kohärenten Signalquelle in einer Richtung abgestrahlt werden, die wenigstens eine räumliche Komponente in der x- und/oder y-Richtung hat.

Gemäß einer vorteilhaften Ausgestaltung der Erfindung ist vorgesehen, dass die Zustände der Atome des wenigstens einen Ensembles von Atomen durch wenigstens einen auf das wenigstens eine Ensemble von Atomen einwirkenden kohärenten Strahlteiler-Kontrolleingriff derart geändert werden, dass ihr Zustand wenigstens zwei Teilaufenthaltswahrscheinlichkeiten der Atome mit unterschiedlichem Impuls aufweist, die voneinander separate Interferometer bilden, wobei die Komponenten der unterschiedlichen Impulse in voneinander abgewandte Richtungen weisen, die jeweils eine räumliche Komponente in der x-y-Ebene haben, und die Richtungen der Bewegungszustände nach Zurücklegung eines bestimmten Wegs in der jeweiligen Richtung jeweils durch Bestrahlung mit wenigstens einem kohärenten Relaunch-Kontrolleingriff so geändert zu Initialzuständen werden, dass sie wieder eine Komponente in Richtung der Ausgangsposition aufweisen und sich so zurückbewegen. Dies ermöglicht die Realisierung wenigstens zweier Interferometer mittels des einen Ensembles von Atomen, indem der erwähnte kohärente Strahlteiler-Kontrolleingriff durchgeführt wird, durch die wenigstens zwei Teilaufenthaltswahrscheinlichkeiten der Atome mit unterschiedlichem Impuls erzeugt werden, also sozusagen zwei unabhängige Teil-Ensembles von Atomen. Die Detektion der Interferometerausgänge der wenigstens zwei Interferometer kann in einem gemeinsamen Detektionsbereich des Atominterferometers erfolgen, der in einer Umgebung der Ausgangsposition liegt. Auf diese Weise kann die Erfindung vorteilhaft auf Beschleunigungsmessungen und Rotationsmessungen aller Art erweitert werden, ohne dass der Bauraum wesentlich vergrößert werden muss.

Die Erfindung kann auch bei Atominterferometrieverfahren angewendet werden, bei denen kein Strahlteiler-Kontrolleingriff durchgeführt wird, sodass nur das eine Ensemble von Atomen die erläuterten Bewegungsabläufe und die Materiewelleninterferometriesequenz durchführt.

Als Interferometerausgänge werden dabei die Zustände des Ensembles von Atomen bzw. dessen Teilaufenthaltswahrscheinlichkeiten zum Ende der Materiewelleninterferometriesequenz verstanden, an dem die Interferenz der Materiewellen gemessen werden kann. Beispielsweise kann hierfür eine Kamera verwendet werden, die durch ein Schauglas in eine Vakuumkammer des Atominterferometers schauen kann und hierbei die Ensembles von Atomen detektieren und auswerten kann.

Gemäß einer vorteilhaften Ausgestaltung der Erfindung ist vorgesehen, dass sich die Interferometerausgänge der wenigstens zwei Interferometer in demselben Detektionsbereich befinden. Hierdurch kann das Atominterferometer bzw. der für die Atominterferometrie erforderliche Bauraum besonders stark minimiert werden. Vorteilhafterweise können sich die Interferometerausgänge in einem Detektionsbereich befinden, der zwischen den örtlichen Wechselwirkungszonen der kohärenten Relaunch-Kontrolleingriffe mit den Atomeingangszuständen liegt.

Gemäß einer vorteilhaften Ausgestaltung der Erfindung ist vorgesehen, dass die kohärenten Kontrolleingriffe der Materiewelleninterferometriesequenz vor oder nach dem kohärenten Relaunch-Kontrolleingriff oder in anderen möglichen Implementierungen während der Materiewelleninterferometriesequenz, also bspw. zwischen den kohärenten Kontrolleingriffen, auf das wenigstens eine Ensemble von Atomen im Atominterferometereingangszustand oder in verschiedenen Atominterferometereingangszuständen bzw. Zustand oder Zustände während der Interferometersequenz einwirken. Im Falle von Lichtpulsen als kohärente Kontrolleingriffe können diese z.B. vor oder nach dem Relaunch-Kontrolleingriff auf das Ensemble von Atomen oder die Teilaufenthaltswahrscheinlichkeiten abgestrahlt werden. Dies ermöglicht große Freiheitsgrade bei der praktischen Realisierung eines Atominterferometers.

Gemäß einer vorteilhaften Ausgestaltung der Erfindung ist vorgesehen, dass durch Auswertung der Interferometerausgänge Beschleunigungswerte und/oder Rotationswerte in einer, mehreren oder allen Achsen x, y, und z berechnet werden. Auf diese Weise können Beschleunigungswerte und/oder Rotationswerte in einer, mehreren oder allen Richtungen des 3D-Raums bestimmt werden.

Die eingangs genannte Aufgabe wird außerdem gelöst durch ein Atominterferometer mit wenigstens einer Atomfalle und wenigstens einer steuerbaren kohärenten Signalquelle zur Abgabe von kohärenten Kontrolleingriffen der Materiewelleninterferometriesequenz, kohärenten Strahlteiler-Kontrolleingriffen und/oder kohärenten Relaunch-Kontrolleingriffen, und mit wenigstens einer Steuereinrichtung zur Steuerung der wenigstens einen kohärenten Signalquelle, wobei die Steuereinrichtung zur Ausführung eines Verfahrens der zuvor erläuterten Art eingerichtet ist. Auch hierdurch können die zuvor erläuterten Vorteile realisiert werden. Die verschiedenen Arten der zuvor genannten Kontrolleingriffe können von einer einzigen kohärenten Signalquelle oder von verschiedenen kohärenten Signalquellen abgegeben werden. Dabei kann die Steuereinrichtung vorteilhaft als rechnergesteuerte Steuereinrichtung ausgebildet sein, die zur Ausführung eines Computerprogramms eingerichtet ist. Auf diese Weise kann das Atominterferometer durch entsprechende Programmierung des Computerprogramms hinsichtlich der Funktionalität gestaltet werden, insbesondere indem es mittels des Computerprogramms zur Ausführung eines Verfahrens der zuvor beschriebenen Art ausgebildet wird.

Die eingangs genannte Aufgabe wird außerdem gelöst durch ein Computerprogrammprodukt umfassend Befehle, die bewirken, dass das Atominterferometer der zuvor beschriebenen Art die Verfahrensschritte der zuvor beschriebenen Art ausführt, wenn das Computerprogramm auf einem Rechner der Steuereinrichtung des Atominterferometers ausgeführt wird. Auch hierdurch können die zuvor erläuterten Vorteile realisiert werden. Das Computerprogramm kann auf einem Speichermedium gespeichert sein. Das Computerprogramm kann als Software, Firmware oder Hardwareprogrammierung eines PLD (programmable logic device) oder als Kombination daraus ausgeführt sein.

Die Erfindung eignet sich z.B. für Anwendungen im Bereich der Navigation, für Rotations- und Beschleunigungsmessungen, z.B. als Teil einer inertialen Quantenmesseinheit zur Unterstützung oder an Stelle konventioneller inertialen Messeinheiten, insbesondere in Bereichen ohne verlässliches globales Navigationssystem (GNSS).

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Soweit ein Rechner erwähnt ist, kann dieser dazu eingerichtet sein, ein Computerprogramm, z.B. im Sinne von Software, auszuführen. Der Rechner kann als handelsüblicher Computer ausgebildet sein, z.B. als PC, Laptop, Notebook, Tablet oder Smartphone, oder als Mikroprozessor, Mikrocontroller oder FPGA, oder als Kombination aus solchen Elementen.

Die Erfindung wird nachfolgend anhand von Ausführungsbeispielen unter Verwendung von Zeichnungen näher erläutert.

Es zeigen
- Figur 1: ein Atominterferometer in schematischer Darstellung in der x-z-Ebene,
- Figur 2: das Atominterferometer gemäß Figur 1 in der x-y-Ebene,
- Figur 3: eine Materiewelleninterferometriesequenz gemäß dem Stand der Technik,
- Figur 4: eine erste Ausführungsform eines erfindungsgemäßen Ablaufs des Interferometrieverfahrens,
- Figur 5: eine zweite Ausführungsform eines erfindungsgemäßen Ablaufs des Interferometrieverfahrens,
- Figur 6: einen zeitlichen Ablauf der Schritte des Interferometrieverfahrens.

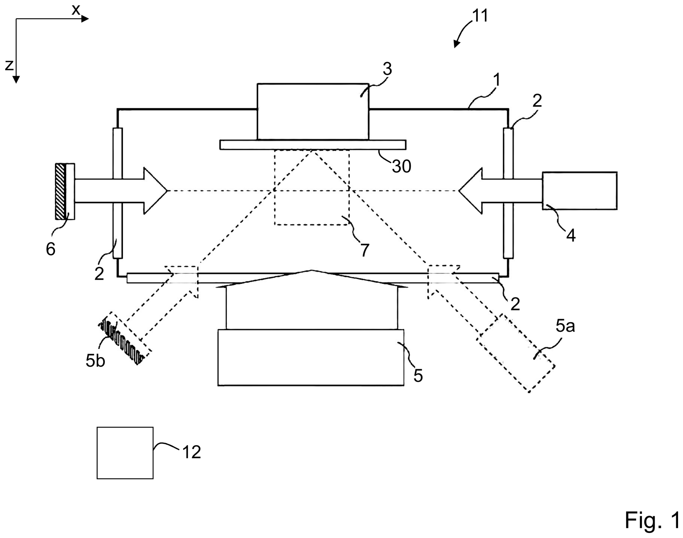

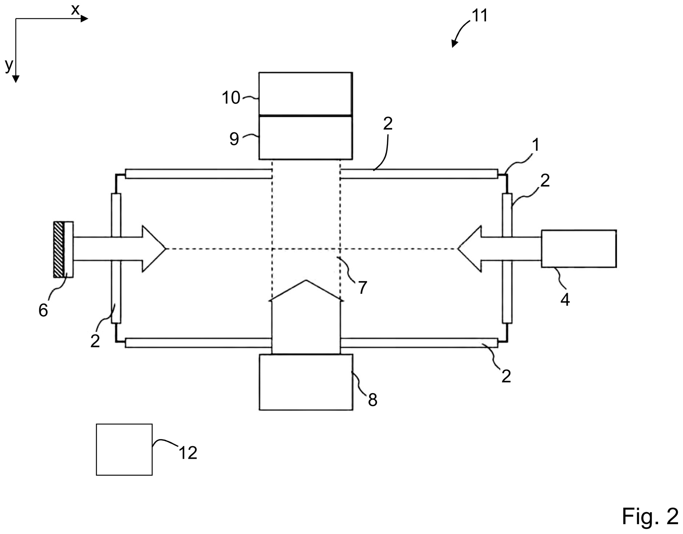

Die Figuren 1 und 2 zeigen ein Atominterferometer **11** in vereinfachter schematischer Darstellung, insbesondere in Hinblick auf die Optik-Implementierung in einem Sensorkopf. Das Atominterferometer **11** hat eine Vakuumkammer 1, die an mehreren Seiten optisch transparente Sichtfenster 2 hat. Die Vakuumkammer 1 kann z.B. eine kubische Form haben. Das Atominterferometer **11** hat außerdem eine Atomfalle 3, z.B. einen Atomchiphalter mit einem Atomchip 30, z.B. mit einer hochreflektierenden Oberfläche. Alternativ kann das Atominterferometer **11** auch eine andere Art von Atomfalle haben, z.B. eine optische Dipolfalle oder eine magnetooptische Atomfalle (MOT magnet-optical trap). Im Falle einer optischen Dipolfalle können die Sichtfenster 2 auch durchlässig für optische Dipolfallen-Laserstrahlen und hochreflektierend für Relaunch-Laserstrahlen oder sonstige kohärente Kontrolleingriffe sein.

Das Atominterferometer **11** hat ferner eine Strahlformungsoptik 4, z.B. für den initialen Impulsübertrag für den Übergang des in der Atomfalle 3 gefangenen Ensembles von Atomen in den Startzustand. Die Strahlformungsoptik 4 kann z.B. einen oder mehrere Kollimatoren und/oder Flat-Top- oder Top-Hat-Strahlformer umfassen. Ferner hat das Atominterferometer **11** eine Strahlformungsoptik 5 für die Interferometrie- und Relaunch-Laserstrahlen bzw. allgemein für die kohärenten Kontrolleingriffe, z.B. Kontrolleingriffe der Materiewelleninterferometriesequenz, Strahlteiler-Kontrolleingriffen und/oder Relaunch-Kontrolleingriffen. Die Strahlformungsoptik 5 liegt der Atomfalle 3 diametral gegenüber. Das Atominterferometer **11** hat außerdem einen Spiegel 6, der der Strahlformungsoptik 4 diametral gegenüberliegend angeordnet ist. Alternativ zu der beschriebenen Strahlformungsoptik 5 kann das Atominterferometer **11** auch eine schräg zur Atomfalle 3 angeordnete Strahlformungsoptik 5a und einen damit zusammenwirkenden Spiegel 5b haben, durch den die Strahlen der Strahlformungsoptik 5a reflektiert werden.

Die Strahlformungsoptik 5, 5a und/oder der Spiegel 5b können fest justiert sein oder einstellbar sein. Sie können auch motorisiert einstellbar sein, um beispielsweise den Winkel von kohärenten Relaunch-Kontrolleingriffen einstellen zu können. Das Atominterferometer **11** hat ferner übliche bekannte Elemente solcher Atominterferometer, die zur Vereinfachung nicht eingezeichnet sind, wie z.B. Spulen, eine 2D-magnetooptische Falle.

Das Atominterferometer **11** hat außerdem eine Strahlformungsoptik 8 für die Einspeisung von Detektionslicht (für eine Absorptionsaufnahme) in die Vakuumkammer 1 sowie wenigstens eine Kamera 10 für die Detektion der Interferometerausgänge, z.B. eine CCD-oder CMOS-Kamera mit einer vorgeschalteten Detektionsoptik 9, z.B. ein Doppellinsensystem zur Vergrößerung und/oder Verkleinerung und ggf. zur Streulichtunterdrückung. Die Interferometerausgänge werden dabei in einem Detektionsbereich 7 in der Vakuumkammer 1 ausgewertet. Man erkennt, dass der Detektionsbereich 7 relativ klein etwa mittig in der Vakuumkammer 1 ausgebildet ist. Hierdurch kann der gesamte Aufbau einschließlich der Vakuumkammer 1 relativ klein gestaltet werden.

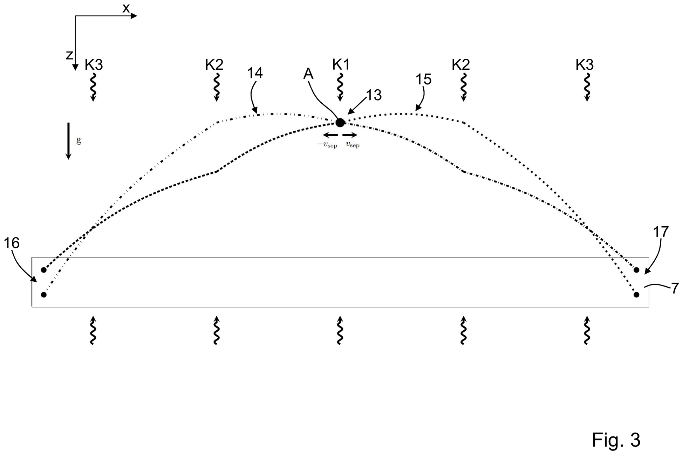

Die Figur 3 zeigt zunächst ein Interferometrieverfahren mit einer Materiewelleninterferometriesequenz, wie sie aus dem Stand der Technik bekannt ist. Einem Ensemble von Atomen 13 wird zunächst an einer Ausgangsposition A, die eine zentrale Stelle in der Vakuumkammer 1 sein kann, ein erster Transfer-Kontrolleingriff aufgeprägt, z.B. im Falle von Lichtpulsen ein erster π/2-Puls. Hierdurch wird das Ensemble von Atomen 13 in zwei Teilaufenthaltswahrscheinlichkeiten 14, 15 der Atome aufgeteilt, was einer Strahlteilung entspricht. Diese Teilaufenthaltswahrscheinlichkeiten 14, 15 bewegen sich mit Geschwindigkeiten -V_{SEP} , V_{SEP} jeweils nach links und rechts, d.h. in positiver und negativer x-Richtung. Ist ein Gravitationseinfluss vorhanden, bewegen sich die Teilaufenthaltswahrscheinlichkeiten 14, 15 zusätzlich in Richtung der Schwerkraft g, d.h. in z-Richtung. Nach einer gewissen Zeit wird auf die jeweiligen Teilaufenthaltswahrscheinlichkeiten 14, 15 ein kohärenter Kontrolleingriff K1 abgegeben, z.B. in Form eines π/2-Pulses und dann ein zweiter kohärenter Kontrolleingriff K2, z.B. in Form eines π-Pulses. Zum Ende der Materiewelleninterferometriesequenz wird auf die jeweilige Teilaufenthaltswahrscheinlichkeiten 14, 15 ein dritter kohärenter Kontrolleingriff K3 ausgeübt, z.B. in Form eines zweiten π/2-Pulses. Hiernach kann in dem Detektionsbereich 7 eine Detektion und Auswertung der Interferometerausgänge 16, 17 der beiden durch die Teilaufenthaltswahrscheinlichkeiten 14, 15 gebildeten Interferometer ausgeführt werden. Wie man erkennt, erstreckt sich der erforderliche Detektionsbereich 7, der von den Detektionselementen, z.B. den Kameras, abzudecken ist, relativ weit in x-Richtung oder allgemein gesagt in horizontaler Richtung, weil auch eine Erstreckung in y-Richtung möglich ist. Hieraus ergibt sich, dass das die Materiewelleninterferometriesequenz ausführende Atominterferometer 11 baulich relativ groß gestaltet werden muss. Statt eines relativ großen Detektionsbereichs 7 können zwar auch zwei voneinander getrennte Detektionsbereiche verwendet werden, aber auch hierdurch sind der Hardwareaufwand und die Baugröße relativ groß.

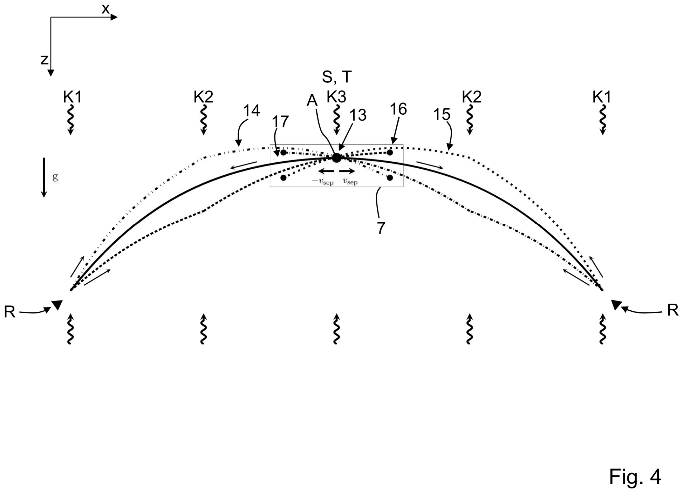

Die Figur 4 zeigt eine erste Ausführungsform eines Interferometrieverfahrens mit einer Materiewelleninterferometriesequenz gemäß der Erfindung. Bei der Ausführungsform der Figur 4 wird das Ensemble von Atomen 13 an der Ausgangsposition A durch einen Transfer-Kontrolleingriff T in die bereits beschriebenen zwei Teilaufenthaltswahrscheinlichkeiten 14, 15 aufgeteilt. Diese bewegen sich, wie anhand der Figur 3 erläutert, mit den Geschwindigkeiten -V_{SEP} , V_{SEP} in horizontalen Richtungen auseinander. Nach Zurücklegung eines bestimmten Wegs wird auf jede der Teilaufenthaltswahrscheinlichkeiten 14, 15 ein Relaunch-Kontrolleingriff R ausgeübt. Hierdurch wird die Bewegungsrichtung der Teilaufenthaltswahrscheinlichkeiten 14, 15, oder wenn nur ein Ensemble von Atomen 13 sich bewegt, dieses wieder in Richtung der Ausgangsposition A zurückbewegt. Erst auf diesem Rückweg wird die eigentliche Interferometriesequenz mit den kohärenten Kontrolleingriffen K1, K2 und K3 auf die Teilaufenthaltswahrscheinlichkeiten 14, 15 aufgeprägt. Dementsprechend können die Interferometerausgänge 16, 17 dann an zentraler Stelle in der Nähe der Ausgangsposition A in einem relativ kleinen Detektionsbereich 7 erfasst und ausgewertet werden.

Die Figur 4 zeigt dabei die Trajektorien der Atomensembles bzw. Teilaufenthaltswahrscheinlichkeiten nach einer Freifallzeit mit ca. dem doppelten der freien Propagationszeit zwischen den kohärenten Kontrolleingriffen K1, K2, K3. Nach der Freifallzeit werden die Bewegungsgeschwindigkeiten der Teilaufenthaltswahrscheinlichkeiten 14, 15 durch die kohärenten Relaunch-Kontrolleingriffe R in horizontaler und vertikaler Richtung invertiert, sodass sich die Teilaufenthaltswahrscheinlichkeiten wieder auf dem Weg zur Ausgangsposition befinden. Wie erwähnt, wird die Interferometerpulssequenz K1, K2, K3 erst auf dem Rückweg angewendet. Um eine räumliche Trennung der Interferometerausgänge 16, 17 zu erreichen, werden diese erst detektiert, nachdem eine gewisse Zeit vergangen ist, nachdem der letzte kohärente Kontrolleingriff K3 ausgeführt wurde.

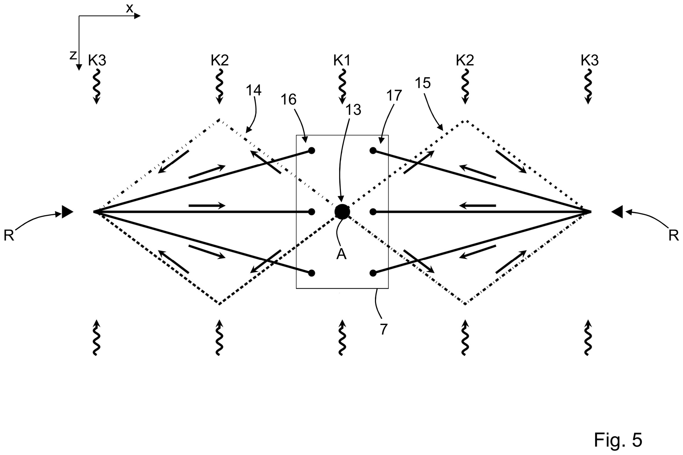

Die Figur 5 zeigt einen Ablauf des erfindungsgemäßen Verfahrens, wenn die kohärenten Kontrolleingriffe K1, K2, K3 der Materiewelleninterferometriesequenz bereits zu Beginn, d.h. vor dem Relaunch-Kontrolleingriff R, ausgeführt werden, d.h. die die Relaunch-Kontrolleingriffe R erfolgen erst, nachdem die Interferometer bereits geschlossen wurden. Dementsprechend wird die Sequenz der kohärenten Kontrolleingriffe K1, K2, K3 wie im Ausgangsfall der Figur 3 ausgeführt. Erst nach dem jeweiligen letzten Kontrolleingriff K3 wird der Relaunch-Kontrolleingriff R ausgeführt, wodurch die Interferometerausgänge 16, 17 wieder in Richtung der Ausgangsposition zum zentralen Detektionsbereich 7 zurückgeworfen werden. Die Detektion der Interferometerausgänge 16, 17 kann dann wiederum nahe der Ausgangsposition A erfolgen. Dieses Verfahren kann insbesondere dann vorteilhaft angewendet werden, wenn die Interferometerausgänge 16, 17 in horizontaler Richtung, d.h. der Richtung des Relaunch-Kontrolleingriffs R, die gleiche Geschwindigkeit haben. Im abgebildeten Beispiel kann als Strahlteiler- Kontrolleingriff beispielsweise die doppelte Bragg-Beugung gewählt werden, welche zur Folge hat, dass die Separation der Teilaufenthaltswahrscheinlichkeiten 14, 15 symmetrisch ist und jeweils drei Interferometerausgänge 16, 17 zu detektieren sind.

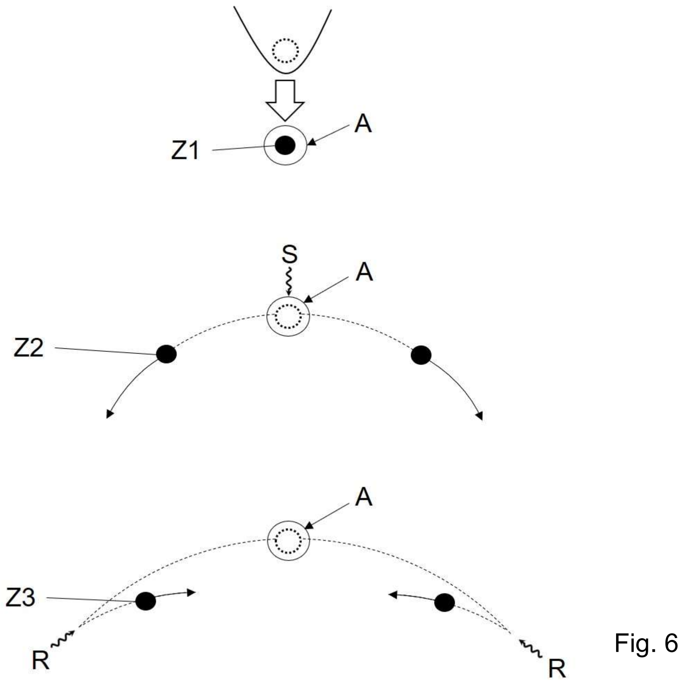

Die Figur 6 verdeutlicht dabei zusätzlich den zeitlichen Ablauf eines erfindungsgemäßen Interferometrieverfahrens. Zunächst befindet sich das Ensemble von Atomen in der Ausgangsposition A in einem Auskoppelzustand Z1. In diesem Auskoppelzustand Z1 ist das Ensemble von Atomen in einem Zustand nach Kühlverfahren und/oder anderen Präparationsschritten, wie im oberen Bereich der Figur 6 erkennbar ist. Das Ensemble von Atomen wird dann in einen von dem Auskoppelzustand Z1 verschiedenen Transferzustand Z2 überführt, wie in Figur 6 in der Mitte dargestellt ist. Schließlich wird, wie die Figur 6 unten zeigt, ein Relaunch-Kontrolleingriff R auf das Ensemble von Atomen ausgeübt, wodurch das Ensemble von Atomen vom Transferzustand Z2 in einen Atominterferometereingangszustand Z3 überführt wird.

Die Erfindung beinhaltet die Möglichkeit der Kombination der folgenden Elemente und Funktionen:
1. ein System für die räumlich aufgelöste Detektion von Atomen, z.B. durch Absorptionsaufnahmen mit einer Kamera (Fig. 1, 2);
2. ein Prozess, der die Atome im Detektionsbereich bewegt, insbesondere auch aus dem Detektionsbereich herausbewegen kann, z.B. durch die Erdbeschleunigung im freien Fall und/oder den Impulsübertrag durch Strahlteilungsprozesse während der Interferometrie und/oder einer zufälligen und/oder dediziert eingestellten Startgeschwindigkeit der Atome, z.B. durch Magnetfeldgradienten oder Impulsübertrag durch (kohärente) Wechselwirkung mit einem (Strahlteiler)Lichtfeld oder einem sonstigen kohärenten Kontrolleingriff; z.B. bewirkt durch ein System zur Erzeugung von Magnetfeldgradienten, wie. z.B. Spulen oder die Kombination aus einem Atom-chip und Spulen oder durch ein Optiksystem, das Laserstrahlen mit verschiedenen Frequenzen und kontrollierbarer Intensität auf die Atome lenkt;
3. ein System, mit dem die Geschwindigkeit der Atome so manipuliert wird, dass sie in den Detektionsbereich bzw. zentralen Bereich der Detektion in der Nähe der Ausgangsposition A zurückkehren, z.B. durch Impulsübertrag durch (kohärente) Wechselwirkung mit einem (Strahlteiler)Lichtfeld oder einem sonstigen kohärenten Kontrolleingriff; z.B. bewirkt durch ein Optiksystem, das Laserstrahlen mit verschiedenen Frequenzen und kontrollierbarer Intensität auf die Atome lenkt, und dessen Ausrichtung bzw. Richtung des Impulsübertrags auf die Atome ggf. anpassbar ist.

Eine mögliche Implementierung des Verfahrens gemäß Fig. 4 sieht folgendermaßen aus:
1. Unter einem Atomchip wird ein Bose-Einstein-Kondensat erzeugt. Dieses wird aus der Falle ausgekoppelt und fällt nach unten (z-Richtung).
2. Ein Strahlteilungsprozess erzeugt eine Superposition von zwei Impulszuständen (Ensembles), die sich mit entgegengesetztem Impuls in x-Richtung senkrecht zur z-Achse auseinanderbewegen.
3. Nach einer Freifallzeit wird durch das System zur Manipulation der Geschwindigkeit der Atome die Bewegung der beiden Ensembles invertiert, so dass sie sich wieder auf einander zu bewegen. Eine exakte Inversion ist nicht notwendig. Dies kann entsprechend einer günstigen Implementierung angepasst werden.
4. Auf dem Rückweg zum Startpunkt wird die Interferometerpulssequenz appliziert; simultan werden zwei Interferometer betrieben. Die Freifallzeit unter Punkt 3 wurde dafür so gewählt, dass genügend Zeit für die Interferometerpulssequenz zur Verfügung steht, bevor die Ensembles den Ausgangspunkt von Punkt 1 bzw. einen Punkt nahe diesem erreichen. Die eigentliche Interferometerpulssequenz kann auch komplexer aussehen und eine längere Zeit in Anspruch nehmen.
5. Das System zur räumlich aufgelösten Detektion, das auf den Startpunkt (Punkt 1) oder einem in Sinne der Erfindung günstigen Punkt gerichtet ist, detektiert die Interferometerausgänge.

Die Implementierung ist auf alle drei Raumachsen übertragbar und nicht auf die Richtungen im beschriebenen Beispiel beschränkt.

Eine Variation des beschriebenen Ansatzes ist das Zurückwerfen der Interferometerausgänge 16, 17, nachdem die Interferometer geschlossen wurden, wie in Fig. 5 dargestellt.

Möglichkeit zur technischen Umsetzung des Systems zur Manipulation der Geschwindigkeit und Bewegungsrichtung der Atome, z.B. für die kohärenten Strahlteiler-Kontrolleingriffe S und kohärenten Relaunch-Kontrolleingriffe R:
1. Strahlteilungsprozesse, ggf. höherer Ordnung, sequentiell in x- und z-Richtung mit Lichtfeldern, die in x- und z-Richtung eingestrahlt werden, realisiert durch ein Optiksystem, das ein Laserlichtfeld mit mehreren Frequenzen und kontrollierbarer Intensität in x-Richtung einstrahlt, sowie ein zweites Optiksystem, das ein weiteres Laserlichtfeld mit mehreren Frequenzen und kontrollierbarer Intensität in z-Richtung einstrahlt; das System in x-Richtung kann dasselbe sein, das anfangs zur Erzeugung der Superposition der zwei Impulszustände verwendet wird; in Mikrogravitation erfolgt dieser Prozess nur in x-Richtung.
2. Strahlteilungsprozesse, ggf. höherer Ordnung, die die Bewegungsrichtung invertierten oder im Sinne einer günstigen Implementierung näherungsweise invertieren oder anpassen, realisiert durch ein Optiksystem, dass ein Laserlichtfeld mit mehreren Frequenzen und kontrollierbarer Intensität unter dem Winkel einstrahlt, in dem **Im**puls auf die Atome übertragen werden soll; das Laserlicht wird an einer Spiegelfläche, z.B. einem Atomchip oberhalb der Atome, reflektiert und dann in sich zurückreflektiert, so dass der Winkel bzw. die Richtung des Impulsübertrags auch für das zweite Interferometer bzw. die zweite Trajektorie passt; der Retroreflexspiegel und die Optik für den eingehenden Strahl können so ausgelegt sein, dass sie eine Variation des Winkels ermöglichen, z.B. durch einstellbare Spiegelhalter.

## Patentansprüche

1. Verfahren zur Steuerung eines Atominterferometers (11), bei dem wenigstens ein Ensemble von Atomen (13) in einem Auskoppelzustand (Z1) präpariert wird, wobei der Auskoppelzustand (Z1) den Zustand nach Kühlverfahren und/oder anderen Präparationsschritten oder allgemein den Zustand vor den nun folgenden Schritten beschreibt, bei dem dann das wenigstens eine Ensemble von Atomen (13) durch einen Transfer-Kontrolleingriff (T) in einen von dem Auskoppelzustand (Z1) verschiedenen Transferzustand (Z2) überführt wird, bei dem dann das wenigstens eine Ensemble von Atomen (13) durch wenigstens einen Relaunch-Kontrolleingriff (R) in einen Atominterferometereingangszustand (Z3) überführt wird, bei dem dann durch auf das wenigstens eine Ensemble von Atomen (13) einwirkende kohärente Kontrolleingriffe (K1, K2, K3) mit dem wenigstens einen Ensemble von Atomen (13) eine Materiewelleninterferometriesequenz durchgeführt wird, **dadurch gekennzeichnet, dass** unter Zugrundelegung eines kartesischen Koordinatensystems mit den Achsen x, y, und z, wobei bei Betrieb des Atominterferometers (11) in einem Gravitationsfeld die z-Achse in Wirkrichtung der Gravitation ausgerichtet ist, das wenigstens eine Ensemble von Atomen (13) von einer Ausgangsposition (A) in eine erste Richtung bewegt wird, die eine räumliche Komponente in der x-y-Ebene hat, und nach Zurücklegung eines bestimmten Wegs in der ersten Richtung das wenigstens eine Ensemble von Atomen (13) durch wenigstens einen kohärenten Relaunch-Kontrolleingriff (R) wieder in Richtung einer Umgebung der Ausgangsposition (A) zurückbewegt wird, wobei die Detektion der Interferometerausgänge (16, 17) nach Durchführung der Materiewelleninterferometriesequenz in einem Detektionsbereich (7) des Atominterferometers (11) erfolgt, der insbesondere in der Umgebung der Ausgangsposition (A) liegen kann.

2. Verfahren nach Anspruch 1, **dadurch gekennzeichnet, dass** die Materiewelleninterferometriesequenz durch drei kohärente Kontrolleingriffe oder mehr als drei kohärente Kontrolleingriffe realisiert wird.

3. Verfahren nach einem der vorhergehenden Ansprüche, **dadurch gekennzeichnet, dass** der wenigstens eine Relaunch-Kontrolleingriff (R) vor und/oder während der Materiewelleninterferometriesequenz erfolgt, wobei im letztgenannten Fall Transferzustand (Z2) und Atominterferometereingangszustand (Z3) zusammenfallen können.

4. Verfahren nach einem der vorhergehenden Ansprüche, **dadurch gekennzeichnet, dass** der Detektionsbereich (7) eine räumliche Ausdehnung in Richtung der x-Achse hat, die geringer ist als der in Richtung der x-Achse zurückgelegte Weg des wenigstens einen Ensembles von Atomen (13).

5. Verfahren nach einem der vorhergehenden Ansprüche, **dadurch gekennzeichnet, dass** der Detektionsbereich (7) eine räumliche Ausdehnung in Richtung der y-Achse hat, die geringer ist als der in Richtung der y-Achse zurückgelegte Weg des wenigstens einen Ensembles von Atomen (13).

6. Verfahren nach einem der vorhergehenden Ansprüche, **dadurch gekennzeichnet, dass** der Detektionsbereich (7) eine räumliche Ausdehnung in Richtung der x-y-Ebene hat, die geringer ist als der in Richtung der x-y-Ebene zurückgelegte Weg des wenigstens einen Ensembles von Atomen (13).

7. Verfahren nach einem der vorhergehenden Ansprüche, **dadurch gekennzeichnet, dass** die kohärenten Kontrolleingriffe (K1, K2, K3) derart auf das wenigstens eine Ensemble von Atomen (13) einwirken, dass der Vektor des Impulsübertrags auf das wenigstens eine Ensemble von Atomen (13) wenigstens eine räumliche Komponente in einem von Null verschiedenen Winkel, z.B. senkrecht zum initialen Bewegungszustand des wenigstens einen Ensembles von Atomen (13) hat.

8. Verfahren nach einem der vorhergehenden Ansprüche, **dadurch gekennzeichnet, dass** die Zustände der Atome des wenigstens einen Ensembles von Atomen (13) durch wenigstens einen auf das wenigstens eine Ensemble von Atomen (13) einwirkenden kohärenten Strahlteiler-Kontrolleingriff (S) derart geändert werden, dass ihr Zustand wenigstens zwei Teilaufenthaltswahrscheinlichkeiten (14, 15) der Atome mit unterschiedlichem Impuls aufweist, die voneinander separate Interferometer bilden, wobei die Komponenten der unterschiedlichen Impulse in voneinander abgewandte Richtungen weisen, die jeweils eine räumliche Komponente in der x-y-Ebene haben, und die Richtungen der Bewegungszustände nach Zurücklegung eines bestimmten Wegs in der jeweiligen Richtung jeweils durch Bestrahlung mit wenigstens einem Relaunch-Kontrolleingriff (R) so geändert werden, dass Interferometereingangszustände (Z3) vorliegen, die wieder eine Komponente in Richtung der Umgebung der Ausgangsposition (A) aufweisen, sich also als Spezialfall zurückbewegen können.

9. Verfahren nach Anspruch 8, **dadurch gekennzeichnet, dass** sich die Interferometerausgänge (16, 17) der wenigstens zwei Interferometer in demselben Detektionsbereich (7) befinden, dessen räumliche Ausdehnung kleiner ist als das Volumen, das wenigstens eines der Interferometer einnimmt.

10. Verfahren nach Anspruch 8 oder 9, **dadurch gekennzeichnet, dass** sich die Interferometerausgänge (16, 17) in einem Detektionsbereich (7) befinden, der sich zwischen den örtlichen Wechselwirkungszonen der kohärenten Relaunch-Kontrolleingriffe (R) befindet, die die Transferzustände (Z2) in die Atominterferometereingangszustände (Z3) überführen oder statt vor auch während der Materiewelleninterferometriesequenz erfolgen können.

11. Verfahren nach einem der vorhergehenden Ansprüche, **dadurch gekennzeichnet, dass** die kohärenten Kontrolleingriffe (K1, K2, K3) vor oder nach dem kohärenten Relaunch-Kontrolleingriff (R) oder in anderen möglichen Implementierungen während der Materiewelleninterferometriesequenz, also bspw. zwischen den kohärenten Kontrolleingriffen, auf das wenigstens eine Ensemble von Atomen (13) im Transferzustand (Z2) oder in verschiedenen Transferzuständen (Z2) einwirken.

12. Verfahren nach einem der vorhergehenden Ansprüche, **dadurch gekennzeichnet, dass** durch Auswertung der Interferometerausgänge (16, 17) Beschleunigungswerte und/oder Rotationswerte in einer, mehreren oder allen Achsen x, y, und z berechnet werden.

13. Atominterferometer (11) mit wenigstens einer Atomfalle (3) und wenigstens einer steuerbaren kohärenten Signalquelle (4, 5, 5a, 5b) zur Abgabe von kohärenten Kontrolleingriffen (K1, K2, K3) der Materiewelleninterferometriesequenz, kohärenten Strahlteiler-Kontrolleingriffen (S) und/oder kohärenten Relaunch-Kontrolleingriffen (R), und mit wenigstens einer Steuereinrichtung (12) zur Steuerung wenigstens der wenigstens einen kohärenten Signalquelle (4, 5, 5a, 5b), **dadurch gekennzeichnet, dass** die Steuereinrichtung (12) zur Ausführung eines Verfahrens nach einem der vorhergehenden Ansprüche eingerichtet ist.

14. Computerprogramm umfassend Befehle, die bewirken, dass das Atominterferometer (11) nach Anspruch 13 die Verfahrensschritte nach einem der Ansprüche 1 bis 12 ausführt, wenn das Computerprogramm auf einem Rechner der Steuereinrichtung (12) des Atominterferometers (11) ausgeführt wird.
